# EUROPÄISCHE PATENTSCHRIFT

(11) **EP 3 250 819 B1**
(45) Veröffentlichungstag und Bekanntmachung des Hinweises auf die Patenterteilung: **15.02.2023**
(21) Anmeldenummer: 16701518.9
(22) Anmeldetag: 26.01.2016
(51) Int. Cl.: F03D 7/02, F03D 7/04, F03D 9/00, F03D 9/12, F03D 9/11, F03D 80/60

(54) **VERFAHREN ZUM BETREIBEN EINES WINDPARKS**
METHOD FOR OPERATING A WIND FARM
PROCÉDÉ D'EXPLOITATION D'UN PARC D'ÉOLIENNES

(30) Priorität: 28.01.2015 DE 102015201431
(43) Veröffentlichungstag der Anmeldung: 06.12.2017
(73) Patentinhaber: Wobben Properties GmbH, 26607 Aurich (DE)
(72) Erfinder: BEEKMANN, Alfred, 26639 Wiesmoor (DE)
(74) Vertreter: Eisenführ Speiser
(86) Internationale Anmeldenummer: PCT/EP2016/051550
(87) Internationale Veröffentlichungsnummer: WO 2016/120260

(56) Entgegenhaltungen:
- EP-A1- 2 236 821
- EP-A2- 2 056 210
- DE-A1-102011 122 433

## Beschreibung

Die vorliegende Erfindung betrifft ein Verfahren zum Betreiben mehrerer Windenergieanlagen, insbesondere ein Verfahren zum Betreiben eines Windparks. Außerdem betrifft die vorliegende Erfindung eine Ansammlung mehrerer Windenergieanlagen, insbesondere einen Windpark. Die vorliegende Erfindung betrifft auch eine Windenergieanlage und ein Verfahren zum Betreiben einer Windenergieanlage.

Windenergieanlagen sind bekannt, sie gewinnen elektrische Energie aus Wind und speisen diese in ein elektrisches Versorgungsnetz ein. Einen Teil der Energie benötigen sie dabei selbst zum Betreiben ihrer Betriebseinrichtungen. Dazu gehört, teilweise auch abhängig von der Bauart der Windenergieanlage, das Betreiben von Azimutantrieben zum Ausrichten der Windenergieanlage in den Wind, das Betreiben von Pitchantrieben zum Verändern eines Anstellwinkels der Rotorblätter zum Wind, das Versorgen des Generators mit Erregerleistung und auch das Betreiben von Heizeinrichtungen, wie beispielsweise zum Beheizen der Rotorblätter, und auch das elektrische Versorgen der Steuereinrichtungen der Windenergieanlage.

Sobald sich eine Windenergieanlage in einem normalen Betrieb befindet und elektrische Leistung erzeugt und in ein elektrisches Versorgungsnetz einspeist, erzeugt sie ausreichend elektrische Leistung um die beschriebene Selbstversorgung damit durchführen zu können und außerdem noch elektrische Leistung ins Netz einspeisen zu können. Wenn die Windenergieanlage dafür nicht ausreichend Leistung erzeugen kann, insbesondere dann, wenn nicht ausreichend Wind vorhanden ist, wird die Windenergieanlage üblicherweise abgeschaltet. Dann benötigt sie auch so gut wie keine Leistung zum Eigenbetrieb mehr. Es kann dann allenfalls noch ein geringer Leistungsbedarf bestehen, der beispielsweise zum Betreiben einer Flugbefeuerungseinrichtung und für einen Standby-Betrieb benötigt wird.

Besonders problematisch kann aber das Wiederinbetriebnehmen einer solchen Windenergieanlage sein, wenn diese dafür elektrische Leistung aus dem elektrischen Versorgungsnetz benötigt. Der Bezug solcher elektrischen Leistung aus dem Netz kann nämlich mitunter sehr kostspielig sein.

Mit diesem Thema beschäftigt sich bereits das US-Dokument US 8,108,079. In dem Dokument sind einige Lösungsvorschläge gegeben, wie eine Leistungsversorgung besonders beim Wiederanlaufen eines Windparks bewerkstelligt werden kann. Einige Fragen sind allerdings offen geblieben, wie bspw. die Handhabung bei schwachem Wind.

Ein weiteres Problem kann sich ergeben, wenn Windenergieanlagen besonders bei länger anhaltend zu schwachem Wind nicht betrieben werden und dadurch durch einen solchen Zustand des Stillstands leiden können. Ein solches Problem kann auch auftreten, wenn eine Verbindung zum elektrischen Versorgungsnetz zumindest zeitweise nicht vorhanden ist. Das kann beispielsweise auch dann der Fall sein, wenn aufgrund einer Störung im Versorgungsnetz, besonders bei einem Netzausfall, die Verbindung getrennt wurde. Auch eine solche Trennung steht dem normalen Betrieb der Windenergieanlagen im Wege und kann zu unerwünschten Standzeiten führen. Mit anderen Worten besteht auch hier die Gefahr eines Vergammelns.

Das Deutsche Patent- und Markenamt hat in der Prioritätsanmeldung zu vorliegender Anmeldung folgenden Stand der Technik recherchiert: US 8,108,079 B2, US 2009/0230689 A1, US 2013/0184884 A1 und WO 2009/082326 A1.

Weitere Verfahren bzw. Systeme aus dem Stand der Technik sind aus EP 2 236 821 A1 und EP 2 056 210 A2 bekannt.

Der vorliegenden Erfindung liegt somit die Aufgabe zugrunde, zumindest eines der o.g. Probleme zu adressieren. Insbesondere soll eine Lösung zur Energieversorgung mehrerer Windenergieanlagen vorgeschlagen werden, insbesondere zur Ergänzung oder Verbesserung zu dem, was das genannte US-Dokument US 8,108,079 vorschlägt. Zumindest soll zu bisher Bekanntem eine alternative Lösung angegeben werden.

Erfindungsgemäß wird ein Verfahren nach Anspruch 1 vorgeschlagen. Es wird also ein Verfahren vorgeschlagen zum Betreiben mehrerer jeweils einen aerodynamischen Rotor mit Rotorblättern und einen elektrischen Generator sowie Betriebseinrichtungen aufweisenden über ein elektrisches Parknetz verbundenen Windenergieanlagen, vorbereitet zum Einspeisen elektrischer Leistung in ein elektrisches Versorgungsnetz, wobei die Windenergieanlagen auch betrieben werden, während sie nicht mit dem elektrischen Versorgungsnetz verbunden sind, und dabei wenigstens eine der Windenergieanlagen elektrische Leistung erzeugt und in ein die Windenergieanlagen verbindendes, zusätzliches lokales Gleichspannungsnetz eingibt, wenn sie derzeit mehr Leistung erzeugt als sie aktuell zum Versorgen ihrer eigenen Betriebseinrichtungen benötig, und/oder ihre Betriebseinrichtungen ganz oder teilweise aus Energie aus dem lokalen Gleichspannungsnetz versorgt werden, wenn sie derzeit weniger Leistung erzeugt als sie aktuell zum Versorgen ihrer eigenen Betriebseinrichtungen benötigt.

Dieses Verfahren legt also wenigstens zwei Windenergieanlagen zugrunde, die durch ein lokales Gleichspannungsnetz verbunden sind. Insoweit betrifft das Verfahren insbesondere auch ein Betreiben eines Windparks. Grundsätzlich kann das Verfahren aber darüber noch hinausgehen. Es beinhaltet nämlich auch die Möglichkeit, dass die mehreren Windenergieanlagen über das lokale Gleichspannungsnetz verbunden sind, ohne ansonsten einen Windpark zu bilden. Das Verfahren kann auch das Betreiben mehrerer Windenergieanlagen eines Windparks betreffen, die über das genannte lokale Gleichspannungsnetz verbunden sind, ohne dass alle Windenergieanlagen des Windparks mit diesem lokalen Gleichspannungsnetz verbunden sind. Vorzugsweise betrifft das Verfahren aber das Betreiben eines Windparks.

Das Verfahren geht nun von dem Fall aus, dass die Windenergieanlagen auch betrieben werden, während sie nicht mit dem elektrischen Versorgungsnetz verbunden sind. Von diesem Fall geht das Verfahren aus und hierbei erzeugt trotzdem wenigstens eine der Windenergieanlagen elektrische Leistung und gibt diese in das lokale Gleichspannungsnetz ein, wenn sie in dem Moment mehr Leistung erzeugt, als sie aktuell zum Versorgen ihrer eigenen Betriebseinrichtungen benötigt.

Außerdem oder alternativ wird vorgeschlagen, dass für diesen Zustand der Nichtverbindung mit dem elektrischen Versorgungsnetz wenigstens eine der Windenergieanlagen ihre Betriebseinrichtungen ganz oder teilweise aus Energie aus dem lokalen Gleichspannungsnetz versorgt, wenn sie derzeit weniger Leistung erzeugt, als sie aktuell zum Versorgen ihrer eigenen Betriebseinrichtungen benötigt. Dies kann auch bedeuten, dass sie einen Teil der benötigten Energie selbst erzeugt und nur einen ergänzenden Teil aus dem lokalen Gleichspannungsnetz bezieht. Entsprechend wird eine Windenergieanlage, die ausreichend und mehr Leistung erzeugt, einen Teil für ihre eigene Versorgung benutzen und den Rest in das lokale Gleichspannungsnetz eingeben.

Besonders vorteilhaft können sich die Windenergieanlagen hierdurch gegenseitig unterstützen, indem die eine Windenergieanlage überschüssige Leistung bzw. Energie der anderen Windenergieanlage verwerten kann. Eine solche Kopplung wird über ein Gleichspannungsnetz erreicht.

Es wurde besonders erkannt, dass eine solche Versorgung der Windenergieanlagen untereinander durch ein Gleichspannungsnetz besonders gut bewerkstelligt werden kann. Hierunter fällt, dass es nicht erforderlich ist, auf eine Synchronisierung der Frequenz, einschließlich Beachtung einer Phasenlage, Rücksicht zu nehmen. Besonders verfügen viele Windenergieanlagen, die nämlich einen Frequenzwechselrichter zum Einspeisen in das Versorgungsnetz und/oder zum Ansteuern des Generators aufweisen, über wenigstens einen Gleichspannungszwischenkreis oder anderen internen Gleichspannungskreis. Darüber hinaus ist durch die Verwendung dieses lokalen Gleichspannungsnetzes eine gute Trennung zur elektrischen Einspeisung in das mit Wechselstrom betriebene elektrische Versorgungsnetz erzielbar.

Das Verwenden einer Batterie oder anderen Energiespeichers ist besonders vorteilhaft durch Gleichspannung, wenn auch der Energiespeicher mit Gleichspannung betrieben wird. Auch das kann durch die vorgeschlagene Verwendung des lokalen Gleichspannungsnetzes erreicht werden.

Weitere Vorteile ergeben sich noch nachfolgend im Zusammenhang mit weiteren Ausführungsformen.

Vorzugsweise zeichnet sich das Verfahren dadurch aus, dass die Windenergieanlagen auch dann betrieben werden, insbesondere nicht abgeschaltet werden, wenn sie aufgrund der vorherrschenden Windbedingungen weniger Leistung erzeugen können, als sie zum Betreiben ihrer Betriebseinrichtungen benötigen. Dies betrifft besonders den Fall schwachen Windes, aber auch andere Fälle, wie teilweise Störungen, können ein Grund sein. In diesem Fall wird vorgeschlagen, die Windenergieanlagen dennoch zu Betreiben, mit der Konsequenz, dass sie zusätzliche Energie benötigen, um diesen Betrieb zu ermöglichen. Mitunter kann ein solcher Betrieb aber auch von kurzer Dauer sein, wenn beispielsweise in Kürze mit stärkerem Wind zu rechnen ist. In jedem Fall kann aber mit einem solchen vorgeschlagenen Betrieb der beschriebenen Gefahr eines Vergammelns entgegengewirkt werden. Erreicht wird dies dadurch, dass die zusätzlich benötigte Energie bzw. Leistung durch das lokale Gleichspannungsnetz bereitgestellt wird. Mit anderen Worten kann die Energie bzw. Leistung vergleichsweise unproblematisch bereitgestellt werden.

Die hierbei benötigte Energie kann beispielsweise durch eine andere Anlage bereitgestellt werden, die beispielsweise durch Bauart oder bedingt durch eine in dem Moment günstiger zum Wind vorhandene Position überschüssige Energie bzw. Leistung erzeugen kann. Vorzugsweise wird aber vorgesehen, dass in dem lokalen Gleichspannungsnetz ein Energiespeicher vorgesehen ist und wenigstens eine Windenergieanlage Energie aus dem Energiespeicher verwendet, um ihre Betriebseinrichtungen damit ganz oder vollständig zu versorgen. Ggf. können hierbei auch alle Windenergieanlagen ihre Betriebseinrichtungen mit Energie aus dem Energiespeicher ganz oder teilweise versorgen.

Ein solcher Energiespeicher, der als Batterie ausgebildet sein kann, kann zu Zeiten mit Energie versorgt werden, zu denen entsprechend mehr Energie zur Verfügung steht, insbesondere bei entsprechend starkem Wind. Besonders dann, wenn mehr Leistung von den Windenergieanlagen erzeugt wird, als sie selbst benötigen, während eine Netztrennung vorliegt, wird diese überschüssige Leistung bzw. Energie zum Laden des Energiespeichers verwendet. Eine Aufladung des Energiespeichers kann auch dann vorteilhaft sein, wenn die Anlagen mit dem Netz verbunden sind, Nennleistung erzeugen können und aufgrund einer Vorgabe durch den Netzbetreiber aber in ihrer Einspeiseleistung zu reduzieren sind.

Als Energiespeicher können somit Batteriebänke, was vereinfacht als Batterie bezeichnet werden kann, oder beispielsweise auch durch Energiespeicher bewerkstelligt werden, die die elektrische Energie in eine andere Energieform zum Speichern umwandeln, wie beispielsweise Wasserstoff oder Erdgas, insbesondere Methan.

Gemäß einer Ausführungsform wird vorgeschlagen, dass wenigstens eine der Windenergieanlage dazu vorbereitet ist, in einem Trudelbetrieb betrieben zu werden, in dem die Rotorblätter mit einem Anlaufwinkel zum Wind angestellt werden, bei dem der Rotor bei schwachem Wind gut anlaufen kann, wobei die jeweilige Windenergieanlage, wenn sie aufgrund der vorherrschenden Windbedingungen weniger Leistung erzeugen kann als sie zum Betreiben ihrer Betriebseinrichtungen benötigen, nach dem Anlaufen mit dem Anlaufwinkel weiter betrieben wird.

Ein Trudelbetrieb ist ein solcher, bei der sich der aerodynamische Rotor angetrieben durch den Wind langsam und mit wenig Kraft dreht. Entsprechend wird wenig oder gar keine Leistung erzeugt. Hierbei wird ein Anlaufwinkel eingestellt, der besonders gut zum Anlaufen der Windenergieanlage geeignet ist und insbesondere den Trudelbetrieb kennzeichnen kann. Der Anlaufwinkel ist also für die Situation vorgesehen, dass der aerodynamische Rotor steht und die Windenergieanlage in ihrer Azimutposition in den Wind ausgerichtet ist. Wirkt nun schwacher Wind auf den so eingestellten aerodynamischen Rotor, ist besonders ein Losbrechmoment erforderlich, damit der aerodynamische Rotor sich zu drehen beginnt. Sobald sich der aerodynamische Rotor dreht, ändern sich auch die Anströmbedingungen an dem Rotorblatt, weil sich der Anströmwinkel vektoriell zusammensetzt aus der Windrichtung mit Windgeschwindigkeit und der Anströmung nebst Richtung, die aus der Bewegung des Rotorblattes resultiert. Der somit faktische oder wirksame Anströmwinkel ändert sich somit signifikant, nachdem der aerodynamische Rotor sich nun zu drehen begonnen hat. Dennoch wird gemäß einer Ausführungsform vorgeschlagen, den Anlaufwinkel unverändert zu lassen, ihn zumindest nicht zu einem üblichen Winkel des Teillastbetriebs zu verändern. Hierdurch wird nun erreicht, dass der aerodynamische Rotor sich dreht, aber mit geringer Geschwindigkeit und Kraft. Hierdurch wird besonders erreicht, dass ein Stillstand des aerodynamischen Rotors vermieden wird. Gleichzeitig kann eine geringe Leistung erzeugt werden, die zum Betreiben der Betriebseinrichtungen der jeweiligen Windenergieanlage verwendet werden kann. Weitere Leistung, die zum Betreiben der Betriebseinrichtungen benötigt wird, kann aus dem lokalen Gleichspannungsnetz entnommen werden.

Es wird nun also vorgeschlagen, die wenigstens eine Windenergieanlage auch dann zu betreiben, wenn sie keine Leistung in das elektrische Versorgungsnetz einspeisen kann. Durch die Verwendung des Anlaufwinkels kann hierbei zwar nicht viel Leistung erzeugt werden, dafür wird durch das Verwenden und insbesondere Beibehalten des Anlaufwinkels aber erreicht, dass die Windenergieanlage, sofern der Wind nicht wieder zurückgeht, nicht stehenbleibt. Durch diesen Vorschlag wird somit ein geringes aber recht zuverlässiges Drehen des aerodynamischen Rotors erreicht. Auf eine hohe Energieausbeute kommt es nicht an und etwaige, weitere zum Betreiben benötigte Energie kann durch das lokale Gleichspannungsnetz bereitgestellt werden.

Besonders vorteilhaft ist es, wenn der Anlaufwinkel zwischen einem Winkel bei Fahnenstellung liegt, in der die Rotorblätter vollständig aus dem Wind gedreht sind, und einem Teillastwinkel oder mittleren Teillastwinkel für einen Teillastbetrieb liegt, in dem die Rotorblätter einen optimalen Winkel aufweisen, insbesondere, dass der Anlaufwinkel etwa 20-40°, insbesondere etwa 30° kleiner als der Winkel bei Fahnenstellung ist, und/oder etwa 40-60°, insbesondere etwa 50° größer als der Teillastwinkel oder mittlere Teillastwinkel für den Teillastbetrieb ist.

Besonders vorteilhaft wird somit ein Anlaufwinkel im Bereich zwischen einem Teillastwinkel und Fahnenstellung gewählt. In Fahnenstellung würde die Windenergieanlage genauso wenig losdrehen wie bei dem Teillastwinkel und somit wird als Anlaufwinkel einer gewählt, der zwischen diesen beiden Extremstellungen liegt und sich außerdem deutlich von diesen beiden Extremstellungen unterscheidet, insbesondere um wenigstens 10°.

Vorzugsweise weist das lokale Gleichspannungsnetz eine Mittelspannung auf, die insbesondere im Bereich von 1200 V - 5 kV liegt. Außerdem oder alternativ weist wenigstens eine der Windenergieanlagen einen Wechselrichter mit einem Gleichspannungszwischenkreis mit einer Zwischenkreisspannung auf und die Zwischenkreisspannung hat etwa die Spannungshöhe wie das lokale Gleichspannungsnetz. Außerdem oder alternativ ist das lokale Gleichspannungsnetz mit dem Gleichspannungszwischenkreis gekoppelt. Besonders bei einer direkten Kopplung zwischen dem Gleichspannungszwischenkreis und dem lokalen Gleichspannungsnetz ist eine Spannung von etwa 700 V für beide vorgesehen. Somit ergibt sich bei dieser direkten Kopplung zwischen Gleichspannungszwischenkreis und lokalem Gleichspannungsnetzwerk eine einfache Kopplungsmöglichkeit. Bei der Verwendung von einer Spannung von 1200 V - 5 kV kann auch eine Kopplung zu einem Gleichspannungszwischenkreis vorgesehen sein, die zum Eingeben in das lokale Gleichspannungsnetz einen Hochsetzsteller aufweisen kann bzw. zum Entnehmen einen Tiefsetzsteller aufweisen kann. Auch solche Bauelemente sind vergleichsweise einfach und kostengünstig herstellbar und einsetzbar.

Gemäß einer Ausführungsform wird vorgeschlagen, dass eine Einschaltgeschwindigkeit, bei der der Generator zum Erzeugen elektrischer Leistung eingeschaltet wird, auf einen so geringen Wert gelegt wird, bei dem weniger Leistung erzeugt wird, als durch die Betriebseinrichtungen der betreffenden Windenergieanlage zu ihrem Betrieb bei diesem Wind verbraucht wird. Auch diese Ausführungsform dient somit dazu, ein Betreiben der Windenergieanlage zu ihrem Selbstschutz umzusetzen. Aus energetischer Sicht ist diese Ausführungsform nicht vorteilhaft, dient aber dem Verhindern der Beschädigung der Windenergieanlage durch zu lange Standzeiten.

Gemäß einer vorteilhaften Ausgestaltung wird vorgeschlagen, dass in dem lokalen Gleichspannungsnetz eine elektrische Spannung über eine Spannungsregelung möglichst konstant gehalten wird, wobei vorzugsweise eine Speichereinrichtung, insbesondere ein Schwungrad mit dem lokalen Gleichspannungsnetz gekoppelt ist und zum kurzzeitigen Abgeben oder Aufnehmen elektrischer Leistung an das bzw. aus dem lokalen Anlagennetz verwendet wird, um die Spannungsregelung durchzuführen bzw. zu unterstützen.

Über eine Spannungsregelung des lokalen Gleichspannungsnetzes kann besonders aus Sicht jeder Windenergieanlage eine jeweils konstante und verlässliche Situation geschaffen werden. Eine Möglichkeit eines Spannungsabfalls kann in einer plötzlich höheren Entnahme elektrischer Leistung liegen und ein plötzlicher Spannungsanstieg könnte durch eine plötzliche Zunahme der eingespeisten Leistung bedingt sein. Entsprechend ist ein Punkt der Spannungssteuerung, kurzzeitig Leistung bzw. Energie zu puffern.

Vorzugsweise werden die Betriebseinrichtungen wenigstens einer der Windenergieanlage so betrieben, dass sie Wärme zum Trocknen oder Trockenhalten der Windenergieanlage oder eines Teils davon erzeugen. Es wird somit vorgeschlagen, den Betrieb der Windenergieanlagen besonders dazu auszurichten, sie gegen Vergammeln zu schützen. Neben einem zumindest langsamen Drehen des aerodynamischen Rotors und auch des Rotors des Generators, um Schäden durch Standzeiten zu verhindern, ist auch das Vermeiden von Feuchtigkeit, insbesondere durch Kondensation, ein Schutz der Anlage. Dies kann besonders durch Beheizen der Anlage oder eines Teils davon erreicht werden. Insoweit wird vorgeschlagen, zumindest so viel Leistung zu erzeugen, nämlich auch dann, wenn nicht in das Netz eingespeist werden kann. Dabei sind insbesondere der Generator und elektronische Einrichtungen der Windenergieanlage solche Teile, die trockengehalten werden sollten. Zu den trocken zu haltenden elektronischen Einrichtungen gehören besonders die Steuerungseinrichtung, eine Gleichrichteinheit und ein Wechselrichter einschließlich Hochsetzsteller, soweit vorhanden.

Erfindungsgemäß wird zudem ein Windpark gemäß Anspruch 10 vorgeschlagen. Dieser Windpark umfasst neben Windenergieanlagen ein lokales Gleichspannungsnetz, das die Windenergieanlagen verbindet und dazu vorbereitet ist, Leistung von wenigstens einer der Windenergieanlagen aufzunehmen, um sie zwischenzuspeichern und/oder um sie einer der Windenergieanlagen zum Betrieb der Betriebseinrichtungen dieser wenigstens einen Windenergieanlage bereitzustellen. Vorzugsweise weist ein solcher Windpark in dem lokalen Gleichspannungsnetz einen Energiespeicher zum Speichern elektrischer Energie auf. Ein solcher Windpark ist besonders dazu vorbereitet, mit einem Verfahren gemäß wenigstens einer der vorstehend erläuterten Ausführungsformen betrieben zu werden. Entsprechend ist der Windpark für den Betrieb gemäß eines solchen Verfahrens ausgebildet und weist die entsprechenden technischen Mittel zur Umsetzung auf.

Erfindungsgemäß wird zudem eine Windenergieanlage vorgeschlagen, die dazu vorbereitet ist, in einem Windpark gemäß wenigstens einer der vorstehend erläuterten Ausführungsformen angeordnet und betrieben zu werden. Insbesondere weist eine solche Windenergieanlage ein Anschlussmittel zum Anschließen an das lokale Gleichspannungsnetz auf.

Erfindungsgemäß wird außerdem ein Verfahren gemäß Anspruch 14 vorgeschlagen. Demnach wird ein Verfahren zum Betreiben einer Windenergieanlage mit einem Rotor mit verstellbaren Rotorblättern vorgeschlagen, wobei die Windenergieanlage dazu vorbereitet ist, bei schwachem Wind mit Windgeschwindigkeiten oberhalb einer Einschaltwindgeschwindigkeit und unterhalb einer Nennwindgeschwindigkeit in einem Teillastbetrieb betrieben zu werden, in dem die Windenergieanlage ausreichend Leistung zum Betreiben ihrer Betriebseinrichtungen erzeugt und in dem die Rotorblätter mit einem Teillastwinkel eingestellt sind, und wobei die Windenergieanlage dazu vorbereitet ist, in einem Trudelbetrieb betrieben zu werden, in dem die Rotorblätter mit einem Anlaufwinkel zum Wind angestellt werden, der näher an einem Winkel bei Fahnenstellung ist, als der Teillastwinkel, und bei dem der Rotor bei schwachem Wind gut anlaufen kann, insbesondere bei schwachem Wind noch unterhalb der Einschaltwindgeschwindigkeit, und wobei die jeweilige Windenergieanlage, wenn sie aufgrund der vorherrschenden Windbedingungen weniger Leistung erzeugen kann als sie zum Betreiben ihrer Betriebseinrichtungen benötigt, im Trudelbetrieb weiter betrieben wird. Die Windenergieanlage wird demnach in einem Bereich unterhalb des Teillastbetriebs betrieben, also bevor ausreichend Wind für einen normalen Betrieb vorhanden ist.

Außerdem ist die Windenergieanlage, die diesem Verfahren zugrunde gelegt wird, in einem Trudelbetrieb betreibbar. Unter dem Trudelbetrieb wird hier ein Betrieb verstanden, bei dem die Rotorblätter in einem Anlaufwinkel zum Wind angestellt sind. Dieser Anlaufwinkel ist einer, der in einem Bereich zwischen einem Teillastwinkel und einem Winkel bei Fahnenstellung liegt. Insbesondere wird dieser Anlaufwinkel, wie gemäß wenigstens einer der o.g. Ausführungsformen beschrieben wurde, ausgewählt.

Mit diesem Anlaufwinkel ist die Windenergieanlage fähig, bei geringem Wind, nämlich Wind, der so gering ist, dass die Anlage nicht im üblichen Teillastbetrieb betrieben werden würde, anzulaufen. Der Anlaufwinkel ist somit eine Einstellung, bei der der aerodynamische Rotor im Stillstand aus sehr schwachem Wind noch so viel Drehmoment erhält, dass er ein Losbrechmoment überwinden kann. Das ist auch noch bei so schwachem Wind möglich, der nicht genügend Energie liefern kann, um die Betriebseinrichtungen der Windenergieanlage zu versorgen. Dennoch wird vorgeschlagen, die Windenergieanlage in diesem Trudelbetrieb bei Beibehaltung des Anlaufwinkels, oder eines ähnlichen Winkels, weiter zu betreiben. Hierdurch wird besonders erreicht, dass die Windenergieanlage, die so betrieben wird, vor Vergammeln durch einen Stillstand geschützt wird. Vorzugsweise wird die Windenergieanlage dauerhaft im Trudelbetrieb betrieben, wobei keine Leistung erzeugt wird. Besonders kann dies für etwaige Lager vorteilhaft sein, wenn hierdurch die Windenergieanlage in stetiger Bewegung gehalten werden kann. Eine sehr langsame Bewegung kann hierfür ausreichen.

Erfindungsgemäß ist vorgesehen, dass eine Luftfeuchtigkeit der Umgebung der Windenergieanlage erfasst wird, die Windenergieanlage für eine Trudelbetriebszeit im Trudelbetrieb betrieben wird, nach Ablauf einer Wartezeit die größer als die Trudelbetriebszeit ist, das Betreiben im Trudelbetrieb wiederholt wird, wenn die Windenergieanlage noch aufgrund der vorherrschenden Windbedingungen weniger Leistung erzeugen kann als sie zum Betreiben ihrer Betriebseinrichtungen benötigt und die Wartezeit und/oder die Trudelbetriebszeit in Abhängigkeit der erfassten Luftfeuchtigkeit eingestellt wird, insbesondere so, dass die Trudelbetriebszeit um so größer gewählt wird, je höher die erfasste Luftfeuchtigkeit ist und/oder die Wartezeit um so kleiner gewählt wird, je höher die erfasste Luftfeuchtigkeit ist.

Hierdurch kann ein Trudelbetrieb bei hoher Luftfeuchtigkeit besonders lange oder besonders häufig durchgeführt werden und dadurch lässt sich besonders ein Schutz vor Korrosion verbessern. Gleichzeitig kann der Trudelbetrieb bei geringer Luftfeuchtigkeit reduziert werden, um dadurch auch den entsprechenden Aufwand zum Betreiben des Trudelbetriebs gering zu halten.

Erfindungsgemäß wird zudem eine Windenergieanlage gemäß Anspruch 16 vorgeschlagen. Eine solche Windenergieanlage weist einen Rotor mit verstellbaren Rotorblättern auf und wird durch ein gemäß wenigstens einer Ausführungsform vorstehend erläutertes Verfahren betrieben. Entsprechend wird eine Windenergieanlage vorgeschlagen, die auch im Falle sehr geringen Windes effektiv vor Vergammeln geschützt werden kann. Auch für eine solche Windenergieanlage und vorstehend beschriebene Verfahren ist es vorteilhaft, Leistung bzw. Energie zum Betreiben der Windenergieanlage, soweit sie derzeit dem Wind nicht entnommen werden kann, durch ein lokales Gleichspannungsnetz bereitzustellen.

Vorzugsweise fällt unter einen erläuterten Trudelbetrieb, bei dem die Windenergieanlage nicht ausreichend Leistung für ihre Selbstversorgung erzeugen kann, ein Betrieb, bei dem diese Selbstversorgung nur für einen zeitlichen Abschnitt nicht gewährleistet ist. Dies kann besonders ein zeitlicher Abschnitt beim Anlaufen der Windenergieanlage sein oder einer, der temporär zusätzliche Leistung benötigt, wie beispielsweise zum Beheizen der Rotorblätter oder zum Pitchen der Rotorblätter. Mit anderen Worten fällt unter einen Trudelbetrieb, bei dem die Windenergieanlage sich nicht selbst versorgen kann, auch ein solcher Betrieb, bei dem Zeitabschnitte enthalten sind, in denen die Windenergieanlage sich selbst versorgen kann, weil dafür temporär wenig Leistung benötigt wird, wenn ein voriger oder sich anschließender temporärer Abschnitt mehr Leistung benötigt, als die Windenergieanlage selbst erzeugen kann.

Vorzugsweise wird in einem Trudelbetrieb keine Leistung erzeugt und insbesondere wird der Generator zum Erzeugen elektrischer Leistung aus Wind in diesem Trudelbetrieb nicht angesteuert. Das kann insbesondere bedeuten, dass bei Verwendung eines fremderregten Synchrongenerators die Fremderregung nicht angesteuert bzw. nicht vorgenommen wird.

Es wird somit gemäß einer Ausführungsform auch vorgeschlagen, die Windenergieanlage in einem Trudelbetrieb zu betreiben, bei dem der Generator nicht angesteuert wird und die Windenergieanlage insoweit nicht vollständig betrieben wird, sondern nur in Bewegung gehalten wird.

Nachfolgend wird die Erfindung exemplarisch anhand von Ausführungsbeispielen unter Bezugnahme auf die begleitenden Figuren näher erläutert.
Fig. 1 zeigt schematisch eine Windenergieanlage in einer perspektivischen Ansicht.
Fig. 2 zeigt schematisch einen Windpark.
Fig. 3 veranschaulicht Blattstellungen einer Windenergieanlage.
Fig. 4 zeigt schematisch elektrische Verbindungen in einem Windpark.

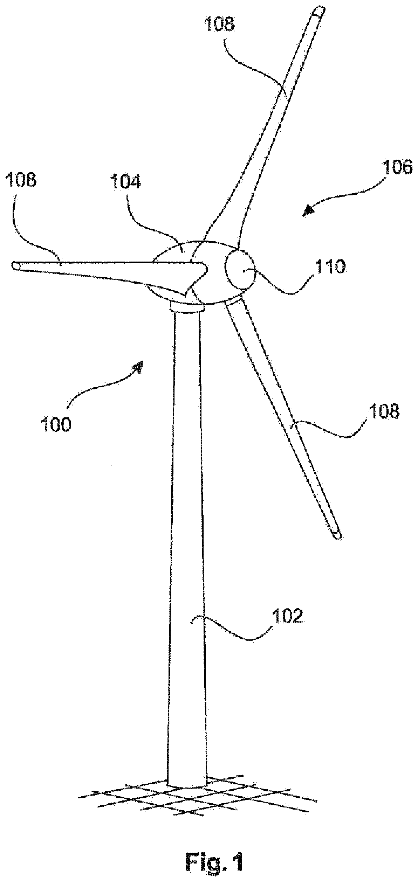

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

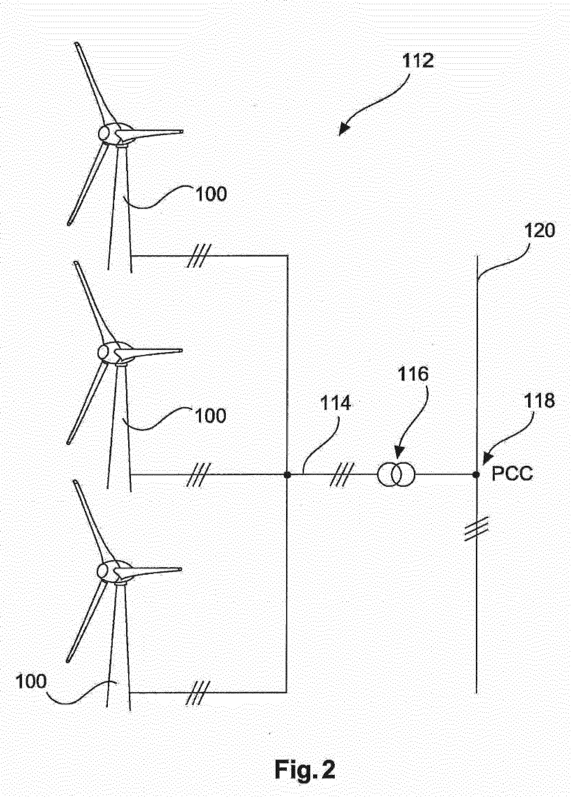

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

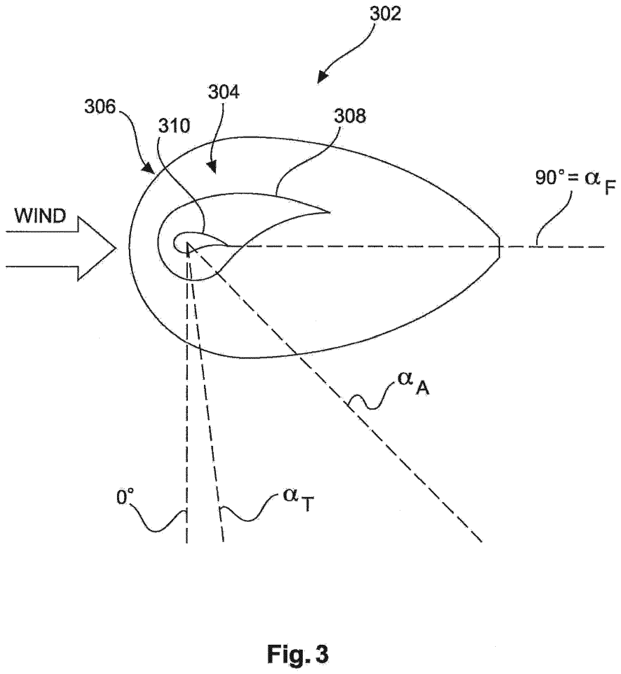

Fig. 3 zeigt schematisch in einer Draufsicht eine Windenergieanlagengondel 302 mit einem Rotorblatt 304. Zwei weitere Rotorblätter einer üblichen Windenergieanlage sind in dieser Fig. 3 der Einfachheit halber nicht dargestellt.

Diese Gondel 302 ist in den Wind ausgerichtet und das Rotorblatt 304 befindet sich etwa in Fahnenstellung. Das Rotorblatt 304 ist an der Nabe 306 angeordnet und in seiner Längsrichtung etwas verwunden. Um das darzustellen, ist von dem Rotorblatt 304 in dieser Draufsicht ein nabennaher Abschnitt 308 und ein nabenferner Abschnitt 310 schematisch gezeigt. Besonders zum nabenfernen Abschnitt 310 hin ist das Rotorblatt 304 etwa parallel zum Wind ausgerichtet. Diese Fahnenstellung ist in Fig. 3 durch eine zum Wind parallele, gestrichelte Linie dargestellt. Sie ist mit 90° = α_{F} gekennzeichnet. Sie weist somit einen Winkel von 90° auf. Dieser Winkel von 90° bezieht sich auf eine Rotorebene, die das Rotorblatt 304 bei seiner Drehung überstreicht. Diese Ebene hat entsprechend den Wert von 0°, was ebenfalls in Fig. 3 eingezeichnet ist.

Fig. 3 zeigt auch einen Winkel α_{T}, der den Winkel angibt, den das Rotorblatt 304 im Teillastbetrieb einnimmt. Dieser Winkel beträgt etwa 6° und entsprechend müsste sich das Rotorblatt 304 aus der gezeigten Fahnenstellung um etwa 84° drehen, um diese Teillaststellung einzunehmen.

In Fig. 3 ist auch eine Stellung für einen Anlaufwinkel α_{A} eingezeichnet, die etwa 45° beträgt, um nur ein Beispiel zu anzugeben. Diese Ausrichtung liegt somit etwa in der Mitte zwischen einer Fahnenstellung mit dem Winkel α_{F} einerseits und dem Teillastbetrieb mit einem Teillastwinkel α_{T} andererseits.

Wird nun das Rotorblatt 304 in die Position mit dem Anlaufwinkel α_{A} verdreht, bietet das Rotorblatt 304 dem Wind eine gute Angriffsposition und das Rotorblatt 304 bzw. die Nabe 306 kann dann auch bei sehr schwachem Wind aus einer gestoppten Position losgedreht werden. Insbesondere kann ein Losbrechmoment überschritten werden, das hierbei benötigt würde. Sobald sich der Rotor mit dem Rotorblatt 304 und der Nabe 306 zu drehen beginnt, ändern sich durch die Bewegung der Rotorblätter 304 die faktischen Windverhältnisse an jedem Rotorblatt 304. Der eingezeichnete Anlaufwinkel α_{A} ist dann nicht mehr optimal, aber es wird dennoch vorzugsweise vorgeschlagen, diesen Anlaufwinkel nun beizubehalten, um einen Trudelbetrieb besonders für längere Zeit zu realisieren.

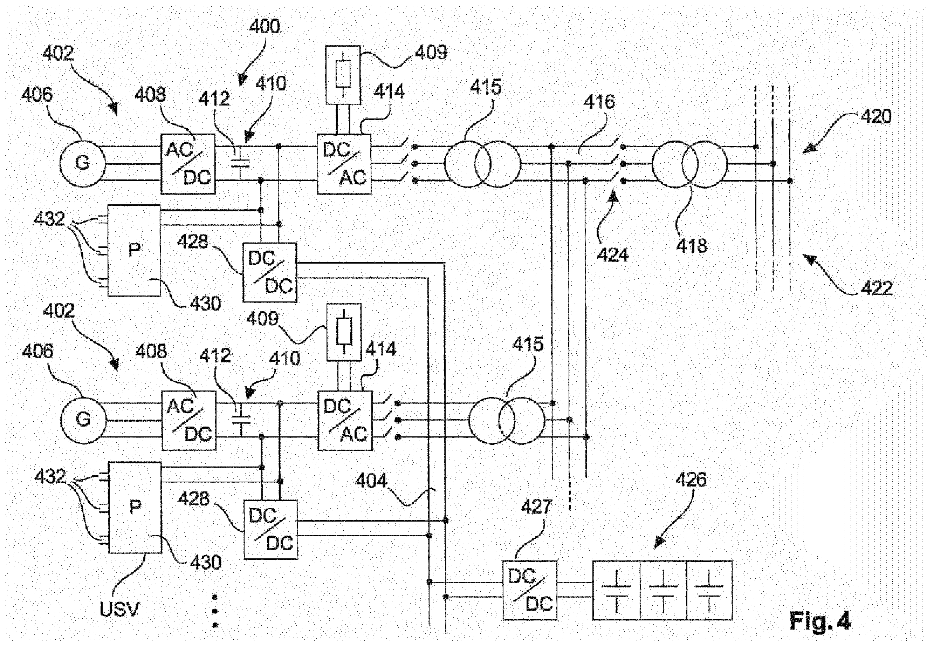

Fig. 4 zeigt schematisch einen Windpark 400 mit zwei Windenergieanlagen 402, die repräsentativ für diverse weitere Windenergieanlagen stehen können.

Die Windenergieanlagen 402 sind insoweit schematisch dargestellt, als von ihnen nur einige wesentliche elektrische Elemente dargestellt sind, um besonders auch die Zusammenhänge zu dem lokalen Gleichspannungsnetz 404 zu verdeutlichen.

Jede Windenergieanlage 402 weist gemäß der Darstellung der Fig. 4 einen Generator 406 auf, der von einem nicht dargestellten aerodynamischen Rotor angetrieben wird, um dadurch elektrische Leistung zu erzeugen. Diese elektrische Leistung wird dreiphasig, insbesondere nämlich als Wechselstrom erzeugt und mit einem Gleichrichter 408 gleichgerichtet. Der resultierende Gleichstrom wird auf den Gleichspannungszwischenkreis 410 gegeben. Der Gleichspannungszwischenkreis weist dabei einen Gleichspannungszwischenkreiskondensator 412 auf. Dieser kann als elektrischer Zwischenspeicher oder Puffer dienen. An dem Gleichspannungszwischenkreis jedes Wechselrichters 414 kann jeweils ein Chopper 409 zum Abführen von Leistung über Widerstände vorgesehen sein, insbesondere um dadurch die Spannung im Gleichspannungszwischenkreis zu steuern.

Aus dem Gleichspannungszwischenkreis 410 erzeugt dann der Wechselrichter 414 einen Wechselstrom, der über ein Wechselstromparknetz 416 und beispielsweise einen Transformator 418 an einem Netzeinspeisepunkt 420 in ein elektrisches Versorgungsnetz 422 eingespeist wird. Eine Netztrennung, die beispielsweise im Fehlerfall erforderlich ist, kann durch einen Trennschalter 424 erreicht werden. Ausgangsseitig der Wechselrichter 414 können Transformatoren 415 vorgesehen sein, die ggf. jeweils durch einen Trennschalter 417 trennbar sind.

Insoweit ist ein Windpark 400 mit Windenergieanlagen 402 durch die beschriebenen Elemente, nämlich Generator 406, Gleichrichter 408, Gleichspannungszwischenkreis 410 und Wechselrichter 414 zum Einspeisen elektrischer Leistung in das Versorgungsnetz 422 betreibbar.

Erfindungsgemäß ist zusätzlich das dargestellte lokale Gleichspannungsnetz 404 vorgesehen um eine gegenseitige Versorgung der Windenergieanlagen 402 untereinander zu ermöglichen. Außerdem sieht dieses lokale Gleichspannungsnetzwerk 404 auch eine elektrische Speichervorrichtung 426 vor, die hier als Batteriebank ausgebildet bzw. veranschaulicht ist. Es können auch weitere gleiche, ähnliche oder andere Speichervorrichtungen vorgesehen sein. Zur Kopplung kann bei jeder Speichervorrichtung 426 ein DC-DC-Steller 427 vorgesehen sein, um die Spannung der lokalen Gleichspannung im Gleichspannungsnetz 404 an die Spannung an der jeweiligen Speichervorrichtung 426, insbesondere an ihren Anschlussklemmen anzupassen.

Dieses lokale Gleichspannungsnetz 404 kann nun über sogenannte DC-DC-Steller 428 an den jeweiligen Gleichspannungszwischenkreis 410 angekoppelt sein. Dieser DC-DC-Steller arbeitet bidirektional, so dass er elektrische Leistung von dem jeweiligen Gleichspannungszwischenkreis 410 in das lokale Gleichspannungsnetz 404 geben kann, oder elektrische Leistung aus dem lokalen Gleichspannungsnetz 404 entnehmen und dem Gleichspannungszwischenkreis zuführen kann.

Dieser DC-DC-Steller kann somit grundsätzlich als Steuermittel für das Abgeben oder Aufnehmen elektrischer Leistung verwendet werden. Gleichzeitig kann er aber auch eine Spannungserhöhung beim Einspeisen in das lokale Gleichspannungsnetz 404 vorsehen bzw. eine Spannungsreduzierung bei der Entnahme elektrischer Leistung aus dem lokalen Gleichspannungsnetz 404, wenn dieses eine entsprechend höhere Spannung im Vergleich zum Gleichspannungszwischenkreis 410 aufweist. Der DC-DC-Steller könnte auch durch zwei Elemente, nämlich je eines für beschriebenen Funktionen bzw. Wirkrichtungen realisiert werden.

Somit ist erkennbar, dass die Verwendung dieses lokalen Gleichspannungsnetzes auf einfache Art und Weise einen Austausch elektrischer Leistung zwischen den Windenergieanlagen 402 ermöglicht und gleichzeitig auf einfache Art und Weise ermöglicht, aus der elektrischen Speichervorrichtung 426 Leistung zu entnehmen oder aber auch dort einzuspeisen.

Dieses lokale Gleichspannungsnetz 404 und insbesondere auch die DC-DC-Steller sind besonders dazu vorgesehen, elektrische Leistung zwischen den Windenergieanlagen 402 bzw. der elektrischen Speichervorrichtung 426 für die Versorgung von elektrischen Betriebseinrichtungen der entsprechenden Windenergieanlagen 402 auszutauschen. Um dies zu veranschaulichen, ist ein symbolischer Leistungsschrank 430 dargestellt, der über den Gleichspannungszwischenkreis 410 mit elektrischer Leistung versorgt werden kann. Dieser Leistungsschrank 430 weist ebenfalls zu symbolischen Zwecken einige Leistungsausgänge 432 auf. Dies soll veranschaulichen, dass von diesem Leistungsschrank 430 aus, oder von einer anderen Einrichtung zum Bereitstellen von Leistung, Betriebseinrichtungen, wie beispielsweise Antriebe zum Verstellen der Rotorblätter, Heizungen der Rotorblätter oder die Versorgung eines fremderregten Gleichstromgenerators mit entsprechender Leistung versorgt werden können. Dieser Leistungsschrank 430 ist besonders als symbolische Einrichtung zu verstehen und Betriebseinrichtungen können auch anderweitig mit dem Gleichspannungszwischenkreis 410 oder beispielsweise mit dem DC-DC-Steller 428 verbunden sein. Vorzugsweise ist in dem Leistungsschrank eine unterbrechungsfrei Stromversorgung USV vorhanden.

Die beiden exemplarisch erläuterten Windenergieanlagen 402 sind auch bei der Erläuterung der internen Elemente mit denselben Bezugszeichen versehen worden. Dies dient besonders der besseren Erläuterung und in der Tat können die beiden exemplarisch dargestellten Windenergieanlagen 402 auch in der Realität identisch sein. Allerdings können auch unterschiedliche Windenergieanlagen oder Windenergieanlagen mit ähnlichen Eigenschaften, aber im Detail anderen Mitteln verwendet werden. Jedenfalls soll die Verwendung gleicher Bezugszeichen zwischen beiden Windenergieanlagen 402 keine inhaltliche Beschränkung darstellen.

## Patentansprüche

1. Verfahren zum Betreiben mehrerer, jeweils einen aerodynamischen Rotor (106) mit Rotorblättern (304) und einen elektrischen Generator (406) sowie Betriebseinrichtungen (P) aufweisenden über ein elektrisches Parknetz verbundenen Windenergieanlagen (402), vorbereitet zum Einspeisen elektrischer Leistung in ein elektrisches Versorgungsnetz (422), wobei
- die Windenergieanlagen (402) auch betrieben werden, während sie nicht mit dem elektrischen Versorgungsnetz (422) verbunden sind, und dabei
- wenigstens eine der Windenergieanlagen (402)
- elektrische Leistung erzeugt und in ein die Windenergieanlagen (402) verbindendes, zusätzliches lokales Gleichspannungsnetz (404) eingibt, wenn sie derzeit mehr Leistung erzeugt als sie aktuell zum Versorgen ihrer eigenen Betriebseinrichtungen (P) benötig, und/oder
- ihre Betriebseinrichtungen (P) ganz oder teilweise aus Energie aus dem lokalen Gleichspannungsnetz (404) versorgt werden, wenn sie derzeit weniger Leistung erzeugt als sie aktuell zum Versorgen ihrer eigenen Betriebseinrichtungen (P) benötigt.

2. Verfahren nach Anspruch 1, **dadurch gekennzeichnet, dass** die Windenergieanlagen (402) auch dann betrieben werden, insbesondere nicht abgeschaltet werden, wenn sie aufgrund der vorherrschenden Windbedingungen weniger Leistung erzeugen können, als sie zum Betreiben ihrer Betriebseinrichtungen (P) benötigen.

3. Verfahren nach Anspruch 1 oder 2, **dadurch gekennzeichnet, dass** in dem lokalen Gleichspanungsnetz ein Energiespeicher vorgesehen ist und wenigstens eine, insbesondere alle Windenergieanlagen Energie aus dem Energiespeicher verwenden um ihre Betriebseinrichtungen damit ganz oder teilweise zu versorgen.

4. Verfahren nach einem der vorstehenden Ansprüche, **dadurch gekennzeichnet, dass** wenigstens eine der Windenergieanlage (402) dazu vorbereitet ist, in einem Trudelbetrieb betrieben zu werden, in dem die Rotorblätter (304) mit einem Anlaufwinkel (α_{A}) zum Wind angestellt werden, bei dem der Rotor (106) bei schwachem Wind gut anlaufen kann, wobei die jeweilige Windenergieanlage (402), wenn sie aufgrund der vorherrschenden Windbedingungen weniger Leistung erzeugen kann als sie zum Betreiben ihrer Betriebseinrichtungen benötigen, nach dem Anlaufen mit dem Anlaufwinkel weiter betrieben wird.

5. Verfahren nach Anspruch 4, **dadurch gekennzeichnet, dass** der Anlaufwinkel (α_{A}) zwischen einem Winkel (α_{F}) bei Fahnenstellung liegt, in der die Rotorblätter (304) vollständig aus dem Wind gedreht sind, und einem Teillastwinkel (α_{T}) oder mittleren Teillastwinkel für einen Teillastbetrieb liegt, in dem die Rotorblätter (304) einen optimalen Winkel aufweisen, insbesondere, dass der Anlaufwinkel etwa 20-40°, insbesondere etwa 30° kleiner als der Winkel bei Fahnenstellung ist, und/oder etwa 40-60°, insbesondere etwa 50° größer als der Teillastwinkel oder mittlere Teillastwinkel für den Teillastbetrieb ist.

6. Verfahren nach einem der vorstehenden Ansprüche, **dadurch gekennzeichnet, dass** das lokale Gleichspannungsnetz (404) wenigstens eine Mittelspannung, insbesondere von 1200 V - 5 kV, aufweist, und/oderdass wenigstens eine der Windenergieanlagen (402) einen Wechselrichter (414) mit einem Gleichspannungszwischenkreis (410) mit einer Zwischenkreisspannung aufweist und das lokales Gleichspannungsnetz (404) eine wenigstens doppelt so hohe Spannung wie die Zwischenkreisspannung aufweist insbesondere etwa 700 V und/oder das Gleichspannungsnetz (404) mit dem Gleichspannungszwischenkreis (410) gekoppelt ist.

7. Verfahren nach einem der vorstehenden Ansprüche, **dadurch gekennzeichnet, dass** eine Einschaltwindgeschwindigkeit, bei der der Generator (406) zum Erzeugen elektrischer Leistung eingeschaltet wird, auf einen so geringen Wert gelegt wird, bei dem weniger Leistung erzeugt wird, als durch die Betriebseinrichtungen zum Betreiben der Windenergieanlage (402) bei diesem Wind verbraucht wird.

8. Verfahren nach einem der vorstehenden Ansprüche, **dadurch gekennzeichnet, dass** in dem lokalen Gleichspannungsnetz (404) eine elektrische Spannung über eine Spannungsregelung möglichst konstant gehalten wird, wobei vorzugsweise eine Speichereinrichtung, insbesondere ein Schwungrad mit dem lokalen Gleichspannungsnetz (404) gekoppelt ist und zum kurzzeitigen Abgeben oder Aufnehmen elektrischer Leistung an das bzw. aus dem lokalen Gleichspannungsnetz (404) verwendet wird, um die Spannungsregelung durchzuführen bzw. zu unterstützen.

9. Verfahren nach einem der vorstehenden Ansprüche, **dadurch gekennzeichnet, dass** Betriebseinrichtungen wenigstens einer der Windenergieanlagen (402) so betrieben werden, dass sie Wärme zum Trocknen oder Trockenhalten der Windenergieanlage (402) oder eines Teils davon erzeugen.

10. Windpark (400) umfassend mehrere, über ein Parknetz verbundene Windenergieanlagen (402), und ein zusätzliches die Windenergieanlagen (402) verbindendes, lokales Gleichspannungsnetz (404), dazu vorbereitet, Leistung von wenigstens einer der Windenergieanlagen (402) aufzunehmen, um sie zwischenzuspeichern und/oder wenigstens einer der Windenergieanlagen (402) zum Betreiben ihrer Betriebseinrichtungen bereitzustellen.

11. Windpark (400) nach Anspruch 10, **dadurch gekennzeichnet, dass** in dem lokalen Gleichspannungsnetz (404) ein Energiespeicher (426) zum Speichern elektrischer Energie vorhanden ist.

12. Windpark (400) nach Anspruch 10 oder 11, dazu vorbereitet, mit einem Verfahren gemäß wenigstens einem der Ansprüche 1 bis 10 betrieben zu werden.

13. Windenergieanlage (402) vorbereitet zum Anordnen und Betreiben in einem Windpark (400) nach einem der Ansprüche 10 bis 12.

14. Verfahren zum Betreiben einer Windenergieanlage (402), mit einem Rotor (106) mit verstellbaren Rotorblättern (304), wobei
- die Windenergieanlage (402) dazu vorbereitet ist, bei schwachem Wind mit Windgeschwindigkeiten oberhalb einer Einschaltwindgeschwindigkeit und unterhalb einer Nennwindgeschwindigkeit in einem Teillastbetrieb betrieben zu werden, in dem die Windenergieanlage (402) ausreichend Leistung zum Betreiben ihrer Betriebseinrichtungen erzeugt und in dem die Rotorblätter (304) mit einem Teillastwinkel (α_{T}) eingestellt sind, und wobei
- die Windenergieanlage dazu vorbereitet ist, in einem Trudelbetrieb betrieben zu werden, in dem die Rotorblätter mit einem Anlaufwinkel (α_{A}) zum Wind angestellt werden, der näher an einem Winkel (α_{F}) bei Fahnenstellung ist, als der Teillastwinkel (α_{T}), und bei dem der Rotor (106) bei schwachem Wind gut anlaufen kann, insbesondere bei schwachem Wind noch unterhalb der Einschaltwindgeschwindigkeit, und wobei
- die jeweilige Windenergieanlage (402), wenn sie aufgrund der vorherrschenden Windbedingungen weniger Leistung erzeugen kann als sie zum Betreiben ihrer Betriebseinrichtungen benötigt, im Trudelbetrieb bzw. mit dem Anlaufwinkel (α_{A}) weiter betrieben wird, wobei
- eine Luftfeuchtigkeit der Umgebung der Windenergieanlage erfasst wird,
- die Windenergieanlage für eine Trudelbetriebszeit im Trudelbetrieb betrieben wird,
- nach Ablauf einer Wartezeit die größer als die Trudelbetriebszeit ist, das Betreiben im Trudelbetrieb wiederholt wird, wenn die Windenergieanlage noch aufgrund der vorherrschenden Windbedingungen weniger Leistung erzeugen kann als sie zum Betreiben ihrer Betriebseinrichtungen benötigt und
- die Wartezeit und/oder die Trudelbetriebszeit in Abhängigkeit der erfassten Luftfeuchtigkeit eingestellt wird, insbesondere so, dass
- die Trudelbetriebszeit umso größer gewählt wird, je höher die erfasste Luftfeuchtigkeit ist und/oder die Wartezeit umso kleiner gewählt wird, je höher die erfasste Luftfeuchtigkeit ist.

15. Verfahren nach Anspruch 14, **dadurch gekennzeichnet, dass** die Windenergieanlage (402) dauerhaft im Trudelbetrieb betrieben wird, wobei keine Leistung erzeugt wird.

16. Windenergieanlage (402) mit einem Rotor (106) mit verstellbaren Rotorblättern (304), **dadurch gekennzeichnet, dass** die Steuerung der Windenergieanlage zur Ausführung des Verfahrens gemäß einem der Ansprüche 14 bis 15 ausgestaltet ist.

## Claims

1. Method for operating multiple wind turbines (402), respectively having an aerodynamic rotor (106) with rotor blades (304) and an electrical generator (406) and also operating devices (P), connected via an electrical park network, prepared for feeding electrical power into an electrical supply grid (422),
- the wind turbines (402) also being operated while they are not connected to the electrical supply grid (422), and
- at least one of the wind turbines (402)
- generating electrical power and feeding it into an additional local DC voltage system (404) connecting the wind turbines (402) if it is currently generating more power than it currently needs for supplying its own operating devices (P), and/or
- its operating devices (P) being supplied entirely or partially with energy from the local DC voltage system (404) if it is currently generating less power than it currently needs for supplying its own operating devices (P).

2. Method according to Claim 1, **characterized in that** the wind turbines (402) are also operated, in particular not switched off, when, because of the prevailing wind conditions, they are able to generate less power than they need for operating their operating devices (P).

3. Method according to Claim 1 or 2, **characterized in that** an energy store is provided in the local DC voltage system and at least one wind turbine, in particular all of the wind turbines, use(s) energy from the energy store in order to supply its/their operating devices with it entirely or partially.

4. Method according to one of the preceding claims, **characterized in that** at least one of the wind turbines (402) is prepared for being operated in an idling mode, in which the rotor blades (304) are adjusted at a starting angle (α_{A}) in relation to the wind at which the rotor (106) can start up well in light wind, the respective wind turbine (402) continuing to be operated with the starting angle after starting up if it is able to generate less power than it needs for operating its operating devices because of the prevailing wind conditions.

5. Method according to Claim 4, **characterized in that** the starting angle (α_{A}) lies between an angle (α_{F}) in the feathered position, in which the rotor blades (304) are turned completely out of the wind, and a part-load angle (α_{T}) or medium part-load angle for a part-load operating mode, in which the rotor blades (304) have an optimum angle, in particular in that the starting angle is approximately 20-40°, in particular approximately 30°, less than the angle of the feathered position, and/or approximately 40-60°, in particular approximately 50°, greater than the part-load angle or medium part-load angle for the part-load operating mode.

6. Method according to one of the preceding claims, **characterized in that** the local DC voltage system (404) has at least a medium voltage, in particular of 1200 V - 5 kV, and/or **in that** at least one of the wind turbines (402) has an inverter (414) with a DC link (410) with a link voltage and the local DC voltage system (404) has a voltage at least twice as high as the link voltage, in particular approximately 700 V, and/or the DC voltage system (404) is coupled with the DC link (410).

7. Method according to one of the preceding claims, **characterized in that** a cut-in wind speed, at which the generator (406) is switched on for generating electrical power, is set to a low value such that less power is generated than is used by the operating devices for operating the wind turbine (402) with this wind.

8. Method according to one of the preceding claims, **characterized in that** an electrical voltage is kept as constant as possible in the local DC voltage system (404) by regulating the voltage, a storage device, in particular a flywheel, preferably being coupled with the local DC voltage system (404) and used for briefly delivering or receiving electrical power to or from the local DC voltage system (404) in order to carry out or assist the regulating of the voltage.

9. Method according to one of the preceding claims, **characterized in that** operating devices of at least one of the wind turbines (402) are operated such that they generate heat for drying or keeping dry the wind turbine (402) or part thereof.

10. Wind farm (400) comprising multiple wind turbines (402), wich are , connected via an electrical park network, and an additional local DC voltage system (404), which connects the wind turbines (402) and is prepared for receiving power from at least one of the wind turbines (402) in order to buffer store it and/or provide it to at least one of the wind turbines (402) for operating its operating devices.

11. Wind farm (400) according to Claim 10, **characterized in that** in the local DC voltage system (404) there is an energy store (426) for storing electrical energy.

12. Wind farm (400) according to Claim 10 or 11, prepared for being operated by a method as provided by at least one of Claims 1 to 10.

13. Wind turbine (402) prepared for arranging and operating in a wind farm (400) according to one of Claims 10 to 12.

14. Method for operating a wind turbine (402), comprising a rotor (106) with adjustable rotor blades (304),
- the wind turbine (402) being prepared for being operated in light wind, with wind speeds above a cut-in wind speed and below a rated wind speed, in a part-load operating mode, in which the wind turbine (402) generates sufficient power for operating its operating devices and in which the rotor blades (304) are set with a part-load angle (α_{T}), and
- the wind turbine being prepared for being operated in an idling mode, in which the rotor blades are adjusted in relation to the wind at a starting angle (α_{A}), which is closer to an angle (α_{F}) in the feathered position than the part-load angle (α_{T}), and at which the rotor (106) can start up well in light wind, in particular in light wind still below the cut-in wind speed, and
- the respective wind turbine (402) continuing to be operated in the idling mode or with the starting angle (α_{A}) if it is able to generate less power than it needs for operating its operating devices because of the prevailing wind conditions, wherein
- an atmospheric humidity of the surroundings of the wind turbine is recorded,
- the wind turbine is operated for an idling time in the idling mode,
- after the elapse of a waiting time that is greater than the idling time, operation in the idling mode is repeated if the wind turbine still is able to generate less power than it needs for operating its operating devices because of the prevailing wind conditions, and
- the waiting time and/or the idling time are/is set in dependence on the recorded atmospheric humidity, in particular such that
- the idling time is chosen to be the greater the higher the recorded atmospheric humidity is and/or the waiting time is chosen to be the lower the higher the recorded atmospheric humidity is.

15. Method according to Claim 14, **characterized in that** the wind turbine (402) is permanently operated in the idling mode, with no power being generated.

16. Wind turbine (402) comprising a rotor (106) with adjustable rotor blades (304), **characterized in that** the control system of the wind turbine is configured to perform the method according to any one of claims 14 to 15.

## Revendications

1. Procédé pour l'exploitation de plusieurs éoliennes (402) présentant respectivement un rotor (106) aérodynamique avec des pales de rotor (304) et un générateur (406) électrique ainsi que des dispositifs d'exploitation (P), reliées par l'intermédiaire d'un réseau de parc électrique, destiné à l'injection d'une puissance électrique dans un réseau d'alimentation électrique (422), dans lequel
- les éoliennes (402) sont également exploitées pendant qu'elles ne sont pas reliées au réseau d'alimentation électrique (422), et ce faisant
- au moins une des éoliennes (402)
- produit de la puissance électrique et l'introduit dans un réseau à tension continue local (404) supplémentaire reliant les éoliennes (402), lorsqu'elle produit pour l'instant plus de puissance qu'elle n'en a besoin actuellement pour l'alimentation de ses propres dispositifs d'exploitation (P), et/ou
- ses dispositifs d'exploitation (P) sont totalement ou partiellement alimentés à partir de l'énergie provenant du réseau à tension continue local (404), lorsqu'elle produit pour l'instant moins de puissance qu'elle n'en a besoin actuellement pour l'alimentation de ses propres dispositifs d'exploitation (P) .

2. Procédé selon la revendication 1, **caractérisé en ce que** les éoliennes (402) sont également exploitées, en particulier ne sont pas mises hors circuit, lorsqu'en raison des conditions de vent prédominantes elles peuvent produire moins de puissance qu'elles en ont besoin pour l'exploitation de leurs dispositifs d'exploitation (P).

3. Procédé selon la revendication 1 ou 2, **caractérisé en ce qu'**un accumulateur d'énergie est prévu dans le réseau de tension continue local et au moins une en particulier toutes les éoliennes utilisent l'énergie provenant de l'accumulateur d'énergie pour alimenter ainsi entièrement ou partiellement leurs dispositifs d'exploitation.

4. Procédé selon l'une quelconque des revendications précédentes, **caractérisé en ce qu'**au moins une de l'éolienne (402) est destinée à être exploitée dans un mode ralenti, dans lequel les pales de rotor (304) sont mises en place avec un angle de démarrage (α_{A}) par rapport au vent, pour lequel le rotor (106) peut démarrer de façon satisfaisante lorsque le vent est faible, dans lequel l'éolienne (402) respective, lorsqu'elle peut produire moins de puissance qu'elle en ont besoin pour l'exploitation de ses dispositifs d'exploitation en raison des conditions de vent prédominantes, peut continuer d'être exploitée après le démarrage avec l'angle de démarrage.

5. Procédé selon la revendication 4, **caractérisé en ce que** l'angle de démarrage (α_{A}) se situe entre un angle (α_{F}) pour la position en drapeau, dans laquelle les pales de rotor (304) sont entièrement amenées en rotation à l'abri du vent, et un angle de charge partielle (α_{T}) ou plusieurs angles de charge partielle pour un mode charge partielle, dans lequel les pales de rotor (304) présentent un angle optimal, en particulier que l'angle de démarrage est d'environ 20-40°, en particulier d'environ 30° inférieur à l'angle pour la position en drapeau, et/ou d'environ 40-60°, en particulier d'environ 50° supérieur à l'angle de charge partielle ou plusieurs angles de charge partielle pour le mode charge partielle.

6. Procédé selon l'une quelconque des revendications précédentes, **caractérisé en ce que** le réseau à tension continue local (404) présente au moins une tension moyenne, en particulier de 1200 V - 5 kV, et/ou qu'au moins une des éoliennes (402) présente un onduleur (414) avec un circuit intermédiaire à tension continue (410) avec une tension de circuit intermédiaire et le réseau à tension continue local (404) présente une tension au moins deux fois plus élevée que la tension de circuit intermédiaire, en particulier environ 700 V et/ou le réseau à tension continue local (404) est couplé au circuit intermédiaire à tension continue (410).

7. Procédé selon l'une quelconque des revendications précédentes, **caractérisé en ce qu'**une vitesse de vent de mise en marche, pour laquelle le générateur (406) est mis en marche pour la production d'une puissance électrique, est placée à une valeur si faible pour laquelle moins de puissance n'est produite que ce qui est consommé par les dispositifs d'exploitation pour l'exploitation de l'éolienne (402) avec ce vent.

8. Procédé selon l'une quelconque des revendications précédentes, **caractérisé en ce que** dans le réseau à tension continue local (404) une tension électrique est maintenue la plus constante possible par l'intermédiaire d'une régulation de tension, dans lequel de préférence un dispositif d'accumulation, en particulier un volant d'inertie est couplé au réseau à tension continue local (404) et pour la distribution ou réception de courte durée de puissance électrique au ou du réseau à tension continue local (404) est utilisé pour mettre en œuvre ou assister la régulation de tension.

9. Procédé selon l'une quelconque des revendications précédentes, **caractérisé en ce que** les dispositifs d'exploitation d'au moins une des éoliennes (402) sont exploités de sorte qu'ils produisent de la chaleur pour le séchage ou le maintien à l'état sec de l'éolienne (402) ou d'une partie de celle-ci.

10. Parc éolien (400) comprenant plusieurs éoliennes (402) reliées par l'intermédiaire d'un réseau de parc, et un réseau à tension continue local (404) supplémentaire reliant les éoliennes (402), destiné à recevoir de la puissance d'au moins une des éoliennes (402), afin de l'accumuler de manière intermédiaire et/ou de la fournir à au moins une des éoliennes (402) pour l'exploitation de ses dispositifs d'exploitation.

11. Parc éolien (400) selon la revendication 10, **caractérisé en ce qu'**un accumulateur d'énergie (426) pour l'accumulation d'énergie électrique est présent dans le réseau à tension continue local (404).

12. Parc éolien (400) selon la revendication 10 ou 11, destiné à être exploité avec un procédé selon au moins l'une des revendications 1 à 10.

13. Eolienne (402) destinée à être disposée et exploitée dans un parc éolien (400) selon l'une quelconque des revendications 10 à 12.

14. Procédé pour l'exploitation d'une éolienne (402), avec un rotor (106) avec des pales de rotor (304) réglables, dans lequel
- l'éolienne (402) est destinée à être exploitée lors d'un vent faible avec des vitesses de vent au-dessus d'une vitesse de vent de mise en marche et au-dessous d'une vitesse de vent nominale dans un mode charge partielle, dans lequel l'éolienne (402) produit suffisamment de puissance pour l'exploitation de ses dispositifs d'exploitation et dans lequel les pales de rotor (304) sont réglées avec un angle de charge partielle (α_{T}), et dans lequel
- l'éolienne est destinée à être exploitée dans un mode ralenti, dans lequel les pales de rotor sont mises en place avec un angle de mise en marche (α_{A}) par rapport au vent, qui est plus près d'un angle (α_{F}) pour la position en drapeau que l'angle de charge partielle (α_{T}) , et selon lequel le rotor (106) lorsque le vent est faible peut démarrer de façon satisfaisante, en particulier lorsque le vent est faible encore au-dessous de la vitesse de vent de mise en marche, et dans lequel
- l'éolienne (402) respective, lorsqu'elle peut produire moins de puissance qu'elle en a besoin pour l'exploitation de ses dispositifs d'exploitation en raison des conditions de vent prédominantes, continue d'être exploitée dans le mode ralenti ou avec l'angle de mise en marche (α_{A}) , dans lequel
- une humidité de l'air de l'environnement de l'éolienne est détectée,
- l'éolienne est exploitée pendant un temps d'exploitation au ralenti dans le mode ralenti,
- après écoulement d'un temps d'attente qui est supérieur au temps de mode ralenti, l'exploitation dans le mode ralenti est répétée, lorsque l'éolienne peut encore produire moins de puissance qu'elle en a besoin pour l'exploitation de ses dispositifs d'exploitation en raison des conditions de vent prédominantes et
- le temps d'attente et/ou le temps de mode ralenti est réglé en fonction de l'humidité d'air détectée, en particulier de sorte que
- le temps de mode ralenti est sélectionné pour être d'autant plus important que l'humidité de l'air détectée est élevée et/ou le temps d'attente est sélectionné pour être d'autant plus petit que l'humidité de l'air détectée est élevée.

15. Procédé selon la revendication 14, **caractérisé en ce que** l'éolienne (402) est exploitée en permanence dans le mode ralenti, dans lequel aucune puissance n'est produite.

16. Eolienne (402) avec un rotor (106) avec des pales de rotor (304) réglables, **caractérisée en ce que** la commande de l'éolienne est conçue pour la mise en œuvre du procédé selon l'une quelconque des revendications 14 à 15.
